(19) Europäisches Patentamt

European Patent Office

Office européen des brevets

(11) **EP 1 533 598 A1**

(12) **EUROPÄISCHE PATENTANMELDUNG**

(43) Veröffentlichungstag:
25.05.2005 Patentblatt 2005/21

(51) Int Cl.⁷: **G01F 23/292**, G01F 25/00

(21) Anmeldenummer: 04027187.6

(22) Anmeldetag: **16.11.2004**

(84) Benannte Vertragsstaaten:
**AT BE BG CH CY CZ DE DK EE ES FI FR GB GR
HU IE IS IT LI LU MC NL PL PT RO SE SI SK TR**
Benannte Erstreckungsstaaten:
**AL HR LT LV MK YU**

(30) Priorität: **19.11.2003 DE 10354041**

(71) Anmelder: **AUTOFLUG GMBH
D-25462 Rellingen (DE)**

(72) Erfinder: **Schnell, Hans-Dietrich
22869 Schenefeld (DE)**

(74) Vertreter: **Müller, Karl-Ernst, Dr. et al
Becker, Müller & Berkenbrink,
Patentanwälte,
Turmstrase 22
40878 Ratingen (DE)**

(54) **Faseroptischer Füllstandssensor für transparente flüssige Medien**

(57) Faseroptische Füllstandserfassungsvorrichtung für flüssige transparante Medien, bei welcher der der Lichtwellenleiter (13) im Inneren des Behälters (10) angeordnet ist, wobei ein an die Lichtquelle (17) angeschlossener Eingangsstrang (15) des Lichtwellenleiters (13) in dem Behälter (10) in einem spiralförmigen Verlauf bis in das tiefste, der Füllstandserfassung zugängliche Niveau des Behälters (10) geführt und von hier aus als geradliniger Ausgangsstrang (16) aus dem Behälter (10) herausgeführt ist und daß dem Eingangsstrang (15) und dem Ausgangsstrang (16) außerhalb des Behälters (10) jeweils eine Vorrichtung (19, 20) zur Messung der Intensität (I) des eingespeisten und des austretenden Lichts zugeordnet ist und das Verhältnis der von den Vorrichtungen (19, 20) gemessenen Intensität ($I_{Ausgang}/I_{Eingang}$) in einem Füllstandswert darstellbar ist.

Fig. 1

**Beschreibung**

Die Erfindung betrifft eine faseroptische Füllstandserfassungsvorrichtung für in Behältern befindliche flüssige transparente Medien mit einem wenigstens teilweise in das Medium eintauchbaren, an eine außerhalb des Behälters befindliche Lichtquelle angeschlossenen Lichtwellenleiter, wobei der Intensitätsunterschied zwischen eingespeistem und austretendem Licht zur Bestimmung des Füllstands des Mediums in dem Behälter herangezogen wird.

Eine Füllstandserfassungsvorrichtung der vorgenannten Art ist in der DE 32 35 591 C2 beschrieben; die bekannte Füllstandserfassungsvorrichtung besteht aus einem in den Behälter eintauchbaren Lichtwellenleiter, der an seinem, in das Medium eintauchbaren Ende schräg oder konisch angeschliffen und poliert ist. Das in den Lichtwellenleiter über eine Lichtquelle eingespeiste Licht wird an der entsprechend gespalteten Spitze des Lichtwellenleiters solange vollständig reflektiert, bis die Spitze des Lichtwellenleiters in das Medium eintaucht, so daß dann an der Spitze des Lichtwellenleiters Licht in das Medium austritt. Über die Erfassung des Intensitätsunterschiedes zwischen dem eingespeisten und dem reflektierten Licht wird demnach festgestellt, ob die Spitze des Lichtwellenleiters in das Medium eintaucht oder nicht.

Mit der bekannten Füllstandserfassungsvorrichtung ist der Nachteil verbunden, daß jeweils nur eine durch die jeweilige Lage der Spitze des Lichtwellenleiters im Behälter bestimmte Füllhöhe erfassbar ist; daher ist in der DE 32 35 591 C2 weiterhin vorgeschlagen, in die beschriebene Vorrichtung einen weiteren Strang eines Lichtwellenleiters mit einer entsprechend in einer anderen Lage angeordneten Spitze zu integrieren, so daß zumindest eine zweite Füllhöhe detektiert werden kann. Weitere Füllhöhen sind jeweils nur durch eine Vervielfachung entsprechender Lichtwellenleiteranordnungen möglich. Somit ist mit der bekannten Füllstandserfassungsvorrichtung eine kontinuierliche Füllstandserfassung über die gesamte Höhe des Behälters nicht möglich.

Der Erfindung liegt daher die Aufgabe zugrunde, eine auf dem Prinzip der faseroptischen Füllstandserfassung beruhende Füllstandserfassungsvorrichtung bereitzustellen, die eine kontinuierliche Ermittlung einer Füllstandsgröße ermöglicht.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, daß der Lichtwellenleiter im Inneren des Behälters angeordnet ist, wobei ein an die Lichtquelle angeschlossener Eingangsstrang des Lichtwellenleiters in dem Behälter in einem spiralförmigen Verlauf bis in das tiefste, der Füllstandserfassung zugängliche Niveau des Behälters geführt und von hier aus als geradliniger Ausgangsstrang aus dem Behälter herausgeführt ist und daß dem Eingangsstrang und dem Ausgangsstrang außerhalb des Behälters jeweils eine Vorrichtung zur Messung der Intensität (I) des eingespeisten und des austretenden Lichts zugeordnet ist und das Verhältnis der von den Vorrichtungen gemessenen Intensität ($I_{Ausgang}$/$I_{Eingang}$) in einem Füllstandswert darstellbar ist. Mit der Erfindung ist der Vorteil verbunden, daß aufgrund des im Behälter befindlichen und daher in Abhängigkeit von unterschiedlichen Füllständen des Mediums in unterschiedlichem Ausmaß benetzten Lichtwellenleiters eine kontinuierliche Messung der jeweiligen Füllhöhe über die gesamte zur Verfügung stehende Füllhöhe des Behälters möglich ist, und zwar unter Ausnutzung des gleichen physikalischen Prinzips ohne eine Änderung der Meßanordnung. Aufgrund des spiralförmigen Verlaufs des Lichtwellenleiters im Behälter ist die benetzbare Länge des Lichtwellenleiters vergrößert, so daß aufgrund des Lichtaustritts in dem von dem Medium benetzten Abschnitt des Lichtwellenleiters die Genauigkeit des Meßergebnisses vergrößert ist.

Da der Lichtaustritt aus dem Lichtwellenleiter in dessen benetztem Abschnitt sowohl vom Material und Aufbau des Lichtwellenleiters als auch von den optischen Eigenschaften des Mediums, die sich zudem mit der Veränderung der Temperatur ändern können, abhängig ist, ist zur Erhöhung der Genauigkeit der Ermittlung eines Füllstandswerts nach einem Ausführungsbeispiel der Erfindung vorgesehen, daß im Bereich der Umlenkung von Eingangsstrang zu Ausgangsstrang des Lichtwellenleiters eine zweite mit einem eine definierte Länge aufweisenden Windungspaket ständig in das Medium eingetauchte Lichtwellenleiteranordnung vorgesehen ist und dem an eine Lichtquelle angeschlossenen Eingangsstrang und dem Ausgangsstrang des zweiten Lichtwellenleiters Vorrichtungen zur Messung der Intensität (I) des eingespeisten und des austretenden Lichts zugeordnet sind und daß in einer nachgeschalteten Auswerteeinheit ein normierter Intensitätsverlust des verwendeten Lichtwellenleiters pro Längeneinheit für das im Behälter befindliche Medium ermittelt und als Korrekturfaktor (K) bei der Umsetzung des Intensitätsverhältnisses ($I_{Ausgang}$/$I_{Eingang}$) in den Füllstandswert berücksichtigt wird. Über die zweite Lichtwellenleiteranordnung wird somit parallel zum Betrieb der ersten Lichtwellenleiteranordnung aufgrund der vollständigen Benetzung der zweiten Lichtwellenleiteranordnung durch das jeweilige Medium und der exakten Kenntnis der benetzten Länge ein normierter, längenabhängiger Intensitätsverlust ermittelt, der unabhängig vom konkreten Füllstand bzw. von der Länge des benetzten Abschnitts des ersten Lichtwellenleiters als Korrekturgröße (K) für die Umrechnung des Intensitätsverhältnisses $I_{Ausgang}$/$I_{Eingang}$ in den Füllstandswert benutzt werden kann.

Nach einem Ausführungsbeispiel der Erfindung ist vorgesehen, daß der Eingangsstrang des Lichtwellenleiters auf der Außenseite eines in dem Behälter angeordneten Trägerkörpers gewendelt und der Ausgangsstrang des Lichtwellenleiters durch den Trägerkörper hindurch aus dem Behälter herausgeführt ist. Nach einem Ausführungsbeispiel der Erfindung ist der Trägerkörper aus einem lichtundurchlässigen Material ausgebildet, um negative Einflüsse auf die Messgenauigkeit zu vermeiden.

Es kann vorgesehen sein, daß die Steigung der spiralförmigen Windungen des Eingangsstranges des Lichtwellenleiters über die Höhe des Behälters unterschiedlich ausgelegt ist, wobei die unterschiedlichen Steigungen der spiralförmigen Windungen bei unregelmäßigen Behältergeometrien eingerichtet sind; insbesondere in den Bereichen des Behälters mit einer größeren Abmessung ist vorgesehen, daß die Steigung der Windungen des Eingangsstranges des Lichtwellenleiters verringert ist.

Während es für die Verwirklichung der Erfindung ausreichend ist, den jeweiligen Lichtwellenleiter ohne eine besondere Ummantelung einzusetzen, kann nach einem Ausführungsbeispiel der Erfindung auch vorgesehen sein, daß der Lichtwellenleiter mit einer lichtdurchlässigen Ummantelung versehen ist.

Um die Meßgenauigkeit zu erhöhen, kann vorgesehen sein, daß die Wellenlänge des in den jeweiligen Eingangsstrang eingespeisten Lichts entsprechend der Farbe des transparenten flüssigen Mediums eingestellt ist.

Es ist vorgesehen, daß die Gesamtenergie des eingespeisten Lichts auf 20µJ begrenzt ist.

Die Anordnung kann dadurch vereinfacht werden, daß in einer nachgeschalteten Recheneinheit Füllhöhen-Volumen-Tabellen abgelegt sind und der als Füllhöhe ermittelte Füllstandswert in Abhängigkeit von der Behältergeometrie korrigierbar ist, so daß unterschiedliche Tankgeometrien mittels entsprechender Korrekturberechnungen ausgeglichen werden.

In einer Weiterbildung der Erfindung kann vorgesehen sein, daß in einer nachgeschalteten Recheneinheit eine Information über die Dichte des der Füllstandsmessung unterworfenen Mediums abgelegt ist und in Abhängigkeit von dem ermittelten Füllstandswert die im Behälter befindliche Masse des Mediums ermittelbar ist. In der Zeichnung sind Ausführungsbeispiele der Erfindung wiedergegeben, welche nachstehend beschrieben sind. Es zeigen:

Fig. 1    den Aufbau einer faseroptischen Füllstandserfassungsvorrichtung in einer schematischen Darstellung,

Fig. 2    den Behälter mit darin angeordneten Lichtwellenleiteranordnungen in einer anderen Ausführungsform.

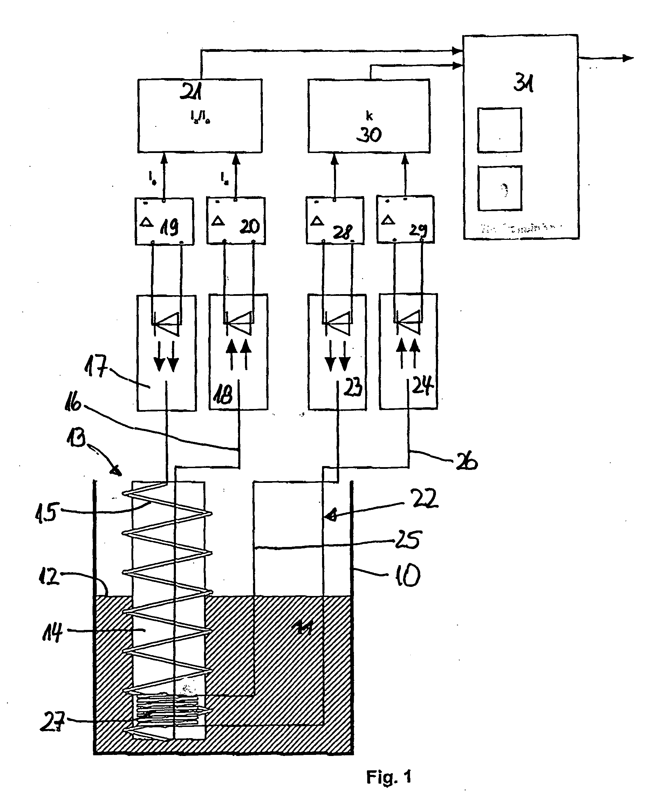

Wie sich aus Fig. 1 ergibt, ist in einem Behälter 10 ein transparentes flüssiges Medium 11 bevorratet, das in dem Behälter 10 eine Füllstandslinie 12 als Füllhöhe ausbildet.

Von einer außerhalb des Behälters 10 angeordneten Lichtquelle 17 ist ein Lichtwellenleiter 13 in den Behälter 10 hineingeführt, und zwar mit einem Eingangsstrang 15, der um den äußeren Umfang eines in den Behälter 10 eingehängten Trägerkörpers 14 mit einem spiralförmigen Verlauf gewendelt ist und am unteren Ende des Trägerkörpers 14 in dem tiefsten der Füllstandsmessung zugänglichen Niveau des Behälters 10 in einen geradlinig durch den vorzugsweise aus einem lichtundurchlässigen Material bestehenden Trägerkörper 14 verlaufenden und aus dem Behälter 10 herausgeführten Ausgangsstrang 16 umgelenkt ist. Der Ausgangsstrang 16 des Lichtwellenleiters 13 mündet in einen Empfänger 18.

Sowohl der Lichtquelle 17 wie auch dem Empfänger 18 ist jeweils eine Intensitätsmeßvorrichtung 19 bzw. 20 zugeordnet, in welchen die Intensität des eingespeisten Lichts $I_{Eingang}$ einerseits und die Intensität des vom Empfänger 18 aufgenommenen austretenden Lichts $I_{Ausgang}$ gemessen werden. Die entsprechenden Signale werden einer Auswerteeinheit 21 zugeführt, in welcher das Verhältnis $I_{Ausgang}/I_{Einggang}$ ermittelt wird.

Zusätzlich ist ein zweiter Lichtwellenleiter 22 vorgesehen, der von einer Lichtquelle 23 aus mit einem Eingangsstrang 25 in den Behälter 10 geführt und in ein aus spiralförmig angeordneten Windungen bestehendes Windungspaket 27 geformt und anschließend als Ausgangsstrang 26 zu einer außerhalb des Behälters angeordneten Empfangseinheit 24 zurückgeführt ist. Das Windungspaket 27 ist im Bereich des tiefsten der Füllstandsmessung zugänglichen Niveaus des Behälters 10 derart angeordnet, daß das Windungspaket 27 ständig in das Medium 11 eingetaucht ist, wobei dessen benetzte Länge exakt vorgegeben ist.

Entsprechend sind der Lichtquelle 23 und der Empfangseinheit 24 jeweils Intensitätsmeßvorrichtungen 28 und 29 zugeordnet, wobei der jeweilige Intensitätsunterschied in einer nachgeschalteten Auswerteeinheit 30 in einen Korrekturfaktor K umgerechnet wird, der ein normierter, längenabhängiger Intensitätsverlustfaktor ist, mit dem das in der Auswerteeinheit 21 ermittelte Intensitätsverhältnis $I_{Ausgang}/I_{Eingang}$ korrigiert wird. Insofern sind die Auswerteeinheit 21 und die Auswerteeinheit 24 an eine Recheneinheit 31 angeschlossen, in welcher ein Füllstandswert (a) in Form der Füllhöhe gemäß der Füllstandslinie 12 nach der Formel ermittelt wird:

$$a = K \cdot (1 - I_{Ausgang}/I_{Eingang})$$

Es kann weiterhin vorgesehen sein, daß in der nachgeschalteten Recheneinheit 31 Höhen-Volumen-Tabellen für unterschiedliche Geometrien des Behälters (10) abgelegt sind, so daß eine Korrektur des berechneten Füllstandswertes in Abhängigkeit von unterschiedlichen Tankgeometrien möglich ist.

Weiterhin kann vorgesehen sein, daß die Recheneinheit 31 um eine Datenbank mit Medieninformationen über die Dichte des im Behälter 10 anstehenden flüssigen transparenten Mediums 11 erweitert ist und die Korrekturgröße K auch zur Bestimmung der Dichte des Mediums 11 verwendet wird, so daß die im Behälter 10 enthaltene Masse des Mediums 11 ermittelbar ist.

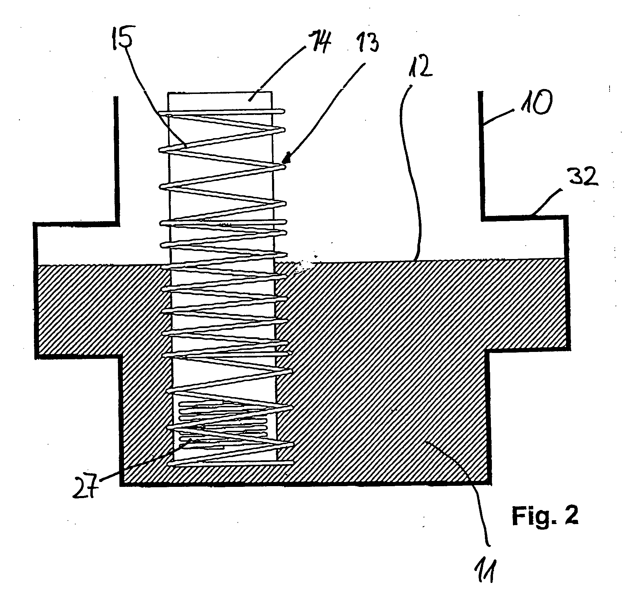

In Fig. 2 ist ein Ausführungsbeispiel dargestellt, bei dem der Behälter 10 eine Ausbauchung 32 aufweist, und dieser unsymetrischen Behältergeometrie wird bei dem in Figur 2 eingestellten Ausführungsbeispiel dadurch Rechnung getragen, daß im Bereich der Ausbauchung 32 die Steigung der um den Trägerkörper 14 verlaufenden spiralförmigen Windungen des Lichtwellenleiters 13 verringert ist.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

**Patentansprüche**

1. Faseroptische Füllstandserfassungsvorrichtung für in Behältern befindliche flüssige transparente Medien mit einem wenigstens teilweise in das Medium eintauchbaren, an eine außerhalb des Behälters befindliche Lichtquelle angeschlossenen Lichtwellenleiter, wobei der Intensitätsunterschied zwischen eingespeistem und austretendem Licht zur Bestimmung des Füllstands des Mediums in dem Behälter herangezogen wird, **dadurch gekennzeichnet, daß** der Lichtwellenleiter (13) im Inneren des Behälters (10) angeordnet ist, wobei ein an die Lichtquelle (17) angeschlossener Eingangsstrang (15) des Lichtwellenleiters (13) in dem Behälter (10) in einem spiralförmigen Verlauf bis in das tiefste, der Füllstandserfassung zugängliche Niveau des Behälters (10) geführt und von hier aus als geradliniger Ausgangsstrang (16) aus dem Behälter (10) herausgeführt ist und daß dem Eingangsstrang (15) und dem Ausgangsstrang (16) außerhalb des Behälters (10) jeweils eine Vorrichtung (19, 20) zur Messung der Intensität (I) des eingespeisten und des austretenden Lichts zugeordnet ist und das Verhältnis der von den Vorrichtungen (19, 20) gemessenen Intensität ($I_{Ausgang}/I_{Eingang}$) in einem Füllstandswert darstellbar ist.

2. Füllstandserfassungsvorrichtung nach Anspruch 1, **dadurch gekennzeichnet, daß** im Bereich der Umlenkung von Eingangsstrang (15) zu Ausgangsstrang (16) des Lichtwellenleiters (13) eine zweite mit einem eine definierte Länge aufweisenden Windungspaket (27) ständig in das Medium (11) eingetauchte Lichtwellenleiteranordnung (22, 25, 26) vorgesehen ist und dem an eine Lichtquelle (23) angeschlossenen Eingangsstrang (25) und dem Ausgangsstrang (26) des zweiten Lichtwellenleiters (22) Vorrichtungen (28, 29) zur Messung der Intensität (I) des eingespeisten und des austretenden Lichts zugeordnet sind und daß in einer nachgeschalteten Auswerteeinheit (30) ein normierter Intensitätsverlust des verwendeten Lichtwellenleiters (13, 22) pro Längeneinheit für das im Behälter(10) befindliche Medium (11) ermittelt und als Korrekturfaktor (K) bei der Umsetzung des Intensitätsverhältnisses ($I_{Ausgang}/I_{Eingang}$) in den Füllstandswert berücksichtigt wird.

3. Füllstandserfassungsvorrichtung nach Anspruch 1 oder 2, **dadurch gekennzeichnet, daß** der Eingangsstrang (15) des Lichtwellenleiters (13) auf der Außenseite eines in dem Behälter (10) angeordneten Trägerkörpers (14) gewendelt und der Ausgangsstrang (16) des Lichtwellenleiters (13) durch den Trägerkörper (14) hindurch aus dem Behälter (10) herausgeführt ist.

4. Füllstandserfassungsvorrichtung nach Anspruch 3, **dadurch gekennzeichnet, daß** der Trägerkörper (14) aus einem lichtundurchlässigen Material besteht.

5. Füllstandserfassungsvorrichtung nach einem der Ansprüche 1 bis 4, **dadurch gekennzeichnet, daß** die Steigung der spiralförmigen Windungen des Eingangsstranges (15) des Lichtwellenleiters (13) über die Höhe des Behälters (10) unterschiedlich ausgelegt ist.

6. Füllstandserfassungsvorrichtung nach Anspruch 5, **dadurch gekennzeichnet, daß** unterschiedliche Steigungen der spiralförmigen Windungen bei unregelmäßigen Behältergeometrien eingerichtet sind.

7. Füllstandserfassungsvorrichtung nach Anspruch 5 oder 6, **dadurch gekennzeichnet, daß** in den Bereichen des Behälters (10) mit einer größeren Abmessung die Steigung der spiralförmigen Windungen des Eingangsstranges (15) des Lichtwellenleiters (13) verringert ist.

8. Füllstandserfassungsvorrichtung nach einem der Ansprüche 1 bis 7, **dadurch gekennzeichnet, daß** der Lichtwellenleiter (13, 22) mit einer lichtdurchlässigen Ummantelung versehen ist.

9. Füllstandserfassungsvorrichtung nach einem der Ansprüche 1 bis 8, **dadurch gekennzeichnet, daß** die Wellenlänge des in den Eingangsstrang (15, 25) eingespeisten Lichts entsprechend der Farbe des transparenten flüssigen Mediums (11) eingestellt ist.

**10.** Füllstandserfassungsvorrichtung nach einem der Ansprüche 1 bis 9, **dadurch gekennzeichnet, daß** die Gesamtenergie des eingespeisten Lichts auf 20µJ begrenzt ist.

**11.** Füllstandserfassungsvorrichtung nach einem der Ansprüche 1 bis 10, **dadurch gekennzeichnet, daß** in einer nachgeschalteten Recheneinheit (31) Füllhöhen-Volumen-Tabellen abgelegt sind und der als Füllhöhe ermittelte Füllstandswert in Abhängigkeit von der Behältergeometrie korrigierbar ist.

**12.** Füllstandserfassungsvorrichtung nach einem der Ansprüche 1 bis 11, **dadurch gekennzeichnet, daß** in einer nachgeschalteten Recheneinheit (31) eine Information über die Dichte des der Füllstandsmessung unterworfenen Mediums (11) abgelegt ist und in Abhängigkeit von dem ermittelten Füllstandswert die im Behälter (10) befindliche Masse des Mediums (11) ermittelbar ist.

Fig. 1

Fig. 2

**Europäisches Patentamt**

## EUROPÄISCHER RECHERCHENBERICHT

Nummer der Anmeldung

EP 04 02 7187

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 4 770 047 A (ARDITTY ET AL) 13. September 1988 (1988-09-13) * Spalte 6, Zeile 18 - Zeile 52; Abbildungen 3,4 * ----- | 1,3 | G01F23/292 G01F25/00 |
| X | US 5 303 586 A (ZHAO ET AL) 19. April 1994 (1994-04-19) * Spalte 3, Zeile 6 - Zeile 42; Abbildungen 1,4 * | 1 | |
| Y | | 8,11 | |
| Y | ----- US 5 291 032 A (VALI ET AL) 1. März 1994 (1994-03-01) * Spalte 1, Zeile 41 - Zeile 50 * * Spalte 4, Zeile 47 - Zeile 65; Abbildungen 1,3 * ----- | 8,11 | |
| X | DE 43 10 059 A1 (VALENTRON AG, APPENZELL, CH) 29. September 1994 (1994-09-29) * Spalte 3, Zeile 61 - Spalte 4, Zeile 26 * * Spalte 4, Zeile 49 - Zeile 59; Abbildungen 1,3 * ----- | 1 | |
| X | GB 2 184 229 A (THE * PLESSEY COMPANY PLC) 17. Juni 1987 (1987-06-17) * Seite 2, Zeile 18 - Zeile 33; Abbildung 4 * ----- | 1,3 | RECHERCHIERTE SACHGEBIETE (Int.Cl.7) G01F |
| D,A | DE 32 35 591 A1 (FRAUNHOFER-GESELLSCHAFT ZUR FOERDERUNG DER ANGEWANDTEN FORSCHUNG E.V.,) 29. März 1984 (1984-03-29) * Seite 5, Absatz 2 - Seite 8, letzter Absatz; Abbildungen 1-4 * ----- | 1 | |

Der vorliegende Recherchenbericht wurde für alle Patentansprüche erstellt

| Recherchenort | Abschlußdatum der Recherche | Prüfer |
|---|---|---|
| Den Haag | 14. März 2005 | Heinsius, R |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 04 02 7187

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-03-2005

| Im Recherchenbericht angeführtes Patentdokument | | Datum der Veröffentlichung | Mitglied(er) der Patentfamilie | | Datum der Veröffentlichung |
|---|---|---|---|---|---|
| US 4770047 | A | 13-09-1988 | FR | 2597971 A1 | 30-10-1987 |
| | | | AT | 54206 T | 15-07-1990 |
| | | | DE | 3763458 D1 | 02-08-1990 |
| | | | EP | 0247909 A1 | 02-12-1987 |
| | | | JP | 62260108 A | 12-11-1987 |
| US 5303586 | A | 19-04-1994 | KEINE | | |
| US 5291032 | A | 01-03-1994 | KEINE | | |
| DE 4310059 | A1 | 29-09-1994 | KEINE | | |
| GB 2184229 | A | 17-06-1987 | KEINE | | |
| DE 3235591 | A1 | 29-03-1984 | KEINE | | |

EPO FORM P0461

Für nähere Einzelheiten zu diesem Anhang : siehe Amtsblatt des Europäischen Patentamts, Nr.12/82